(19) **Europäisches Patentamt**

**European Patent Office**

**Office européen des brevets**

(11) **EP 1 148 751 A1**

(12) **EUROPEAN PATENT APPLICATION**

(43) Date of publication:
**24.10.2001 Bulletin 2001/43**

(51) Int Cl.7: **H04Q 7/38**

(21) Application number: **00108554.7**

(22) Date of filing: **19.04.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **SIEMENS AKTIENGESELLSCHAFT**<br>**80333 München (DE)** | (72) Inventors:<br>• **Bahrenburg, Stefan, Dr.**<br>  **28832 Achim (DE)**<br>• **Dasser, Peter**<br>  **81369 München (DE)**<br>• **Franz, Volker**<br>  **82178 Puchheim (DE)** |

(54) **Method for signalling of the base station identifier code**

(57)  Method for signalling an identification code (BSIC), said identification code (BSIC) being used to identify a base station of a radio communication system, characterised in that a synchronisation sequence (SYNC), a midamble code and/or a scrambling code are used as the identification code.

EP 1 148 751 A1

Printed by Jouve, 75001 PARIS (FR)

**Description**

Considered as being the state of art are the referred documents [1] to [6].

**Signalling of the Base Station Identifier Code**

At present the Chinese TD-SCDMA is begin standardised within CWTS (Chinese Wireless Telecommunication Standard), ITU (International Telecommunications Union) and 3GPP (Third Generation Partnership Project).
Like in GSM the TD-SCDMA standard shall also comprise a solution for quickly providing the BSIC (Base Station Identifier Code). The BISC consists of the BCC, the Base station Colour Code, identifying the base station in the network and the NCC, the Network Colour Code identifying the network (the operator) the base station is operating in. The BSIC is used by the mobile station during initial cell search and handover to quickly identify the base station. Thus, the mobile stations quickly can decide whether it is detecting the right base station or not.
In the present CWTS specifications no solution for this problem is given.
In GSM 3 bits of BCC and 3 bits of NCC are transmitted for the BSIC in the SCH (Synchronisation CHannel) which is brought on the same carrier as the BCCH (Broadcast Control CHannel). In order to obtain the BSIC the mobile station is obliged to decode the SCH.
In the TD-SCDMA system there are 32 different SYNC (SYNChronisation) signatures for the DwPTS (Downlink Pilot Time Slot). The DwPTS is used for the mobile station to identify the frame timing of the base station. Each base station uses a single SYNC sequence. All sequences are reused throughout the network. Thus, the identity of the used code amongst the 32 SYNCs are used to signal the BCC (5 bit). Each of the SYNC sequence is linked to a group of 4 basic midamble codes and 4 scrambling codes (linked one to one to the basic midamble codes). The identity of the used code amongst the 4 codes can be used to signal 2 bits of NCC.
The advantage is that no extra detection is necessary for the mobile station to get to know the BSIC. The normal measurements for initial cell search and handover are sufficient for receiving the information about the BSIC. Only the SYNC sequence and the midamble (identifying the total BSIC) needs to be detected to obtain the information about the BISC.
More over, the 7 bits used for the signalling of the BSIC can be used for the BCC and the NCC as configured by the operators. In the operators decide to use 4 bits for the BCC and 3 bit for the NCC. This is up to bilateral agreements between the operators. In this way, any mapping of the 7 bits on the BCC and the NCC should be covered by this invention.
The inventive step is

   a) To use the identity of the used SYNC sequences and the used basic midamble codes (and/or scrambling codes) to signal the information of the BSIC, and
   b) To avoid additional detection effort for the detection of the BSIC. The detection of the BSIC is a side product of the initial cell search and the handover procedures. This reduces the complexity in the mobile station.

The SYNC sequences are numbered with the SYNC IDs of 0...31. The binary expression of this Ids is the BCC.
The basic midamble codes and the scrambling codes are numbered with the IDs 0...127. In the binary expression the 5 MSB (Most Significant Bits) identify the BCC and the 2 LSB (Least Significant Bits) identify the NCC.

Table 1

| Relationship between the SYNC and SYNC1 sequences, the scrambling codes and the midamble codes | | | | |
|---|---|---|---|---|
| Code Group | Associated Codes | | | |
| | SYNC ID | SYNC1 ID (coding criteria) | Scrambling Code ID (coding criteria) | Basic Midamble Code ID (coding criteria) |
| Group 1 | 0 | 0~7 (000~111) | 0 (00) | 0 (00) |
| | | | 1 (01) | 1 (01) |
| | | | 2 (10) | 2 (10) |
| | | | 3 (11) | 3 (11) |

Table 1   (continued)

| Relationship between the SYNC and SYNC1 sequences, the scrambling codes and the midamble codes | | | | |
|---|---|---|---|---|
| Code Group | Associated Codes | | | |
| | SYNC ID | SYNC1 ID (coding criteria) | Scrambling Code ID (coding criteria) | Basic Midamble Code ID (coding criteria) |
| Group 2 | 1 | 8~15 (000~111) | 4 (00) | 4 (00) |
| | | | 5 (01) | 5 (01) |
| | | | 6 (10) | 6 (10) |
| | | | 7 (11) | 7 (11) |
| | | . . . | | |
| Group 32 | 31 | 248~255 (000~111) | 124 (00) | 124 (00) |
| | | | 125 (01) | 125 (01) |
| | | | 126 (10) | 126 (10) |
| | | | 127 (11) | 127 (11) |

**Relation of common physical and logical channels in a TD-SCDMA system**

Several problems arise when applying DTX because the information transmitted during the silent modus is significantly reduced compared to the regular modus. If the transmission is entirely interrupted during the silent modus, several procedures cannot be supported any more without additional changes:

- The maintenance of uplink synchronisation control (ULSC) :
  Normally, the synchronisation shift (SS) is transmitted with each burst in the downlink in order to update the timing advance in the mobile. In the uplink, the synchronisation shift received in the downlink is repeated for acknowledgement. However, the reception in the uplink is utilised to derive the SS. Hence, the maintenance of the ULSC is affected by both, the downlink DTX (Discontinuous Transmission) and the uplink DTX. In the downlink, the synchronisation shift signals the mobile station whether it has to increase, decrease, or hold the timing advance. If this information is not transmitted any more, the UE is not able to maintain the accuracy of the UL synchronisation. In large silent periods, it is likely that the mobile station looses the uplink synchronisation totally.

- The power control:
  Similar to the synchronisation shift, with each burst a power control symbol is transmitted. The base station can signal the UE whether to increase, decrease, or hold the transmit power level. This mechanism is the same for the uplink direction. Hence, if this information is not transmitted any more, the mobile station is not able to maintain the accuracy of the power control.

- The beamforming:
  The received midamble is processed in order to estimate the channel impulse response. In the uplink, this estimated channel impulse response is employed to form an antenna beam in receive and in transmit direction. If no information is provided during the silent mode, beamforming cannot be maintained.

- The SACCH transmission:
  In TD-SCDMA systems, the SACCH (Slow Associated Control Channel) is distributed over N frames (a proposed number for N is e.g. 48 and will be used in the following) and continuously transmitted together with the traffic data. Interrupts of the transmission within the SACCH period decrease the decodability. E.g. if the interruptions are too long, the information cannot be retrieved from the remaining information. The entire SACCH block is lost.

The DTX procedure has to ensure that all the above mentioned procedures can be maintained and that the related information is provided.

The solution of the above mentioned problems arising from DTX transmission are given in the following DTX strategy. This strategy ensures a stable connection for DTX. Note that the DTX procedures are similar to GSM. E.g. the SID frame indicates a silent period. In the following the new aspects of DTX in TD-SCDMA are focused.

**Maintenance of power control and ULSC**

The power control and the ULSC can be maintained if the midamble and the L1 (layer 1) signalling, i.e. the power control symbol and the synchronisation shift symbol, is transmitted every $k^{th}$ frame. Compared to continuous transmission, the synchronisation and the power tracking capabilities are reduced. However, if k is carefully chosen, the performance of both procedures can be guaranteed to a certain extend. If the same precision has to be maintained, k has to be chosen to 1. The value of k has to be set by e.g. the BSC (Base Station Controller) resp. RNC (Radio Network Controller).
The midamble can also be used for measurements, and hence, the frequency of measurement is only decreased to a certain extend.

L1 symbols (SS,PC)

Figure 1. The structure of shortened burst

An additional randomly chosen offset reduces the probability that all silent traffic channels transmit the shortened burst at the same time. Hence, interference can be reduced.

**The SACCH transmission**

In normal operation, one SACCH data block is distributed over 48 frames and multiplexed with other transport channels. If the transmitter inhibits the transmission of the data, the SACCH transfer is also temporarily interrupted. Hence, not the entire information of the SACCH block is available at the receiver. If the silent mode lasts too long, the block cannot be decoded, and therefore, the entire block is lost. In Fig. 2 the interruption of the SACCH transmission for DTX without particular modification is illustrated. Due to long silent periods, the SACCH block has to be discarded at the receiver.

Figure 2. SACCH transmission

In order to enable a reliable transmission of the SACCH data, the SACCH information is transmitted in a compressed form using the transport channel.

Similar to GSM, the silent mode starts with the transmission of the SID frame. The SID frame is then followed by the compressed SACCH.

The stealing flag after the SID frame indicates whether SACCH/FACCH or speech data is send. This is needed if speech transmission is resumed. The compressed SACCH block as well as the FACCH block must comprise an additional stealing flag. This stealing flag is used to distinguish the compressed SACCH from the FACCH.

The stealing flags of the compressed SACCH and the FACCH could e.g. have the same value. In order to distinguish between the SACCH and the FACCH information, an additional stealing flag is used. This stealing flag might be added before channel coding. Although the rule is to send a compressed SACCH directly after the SID frame, this ensures a stable procedure even if no SID frame is recognised.

The structure of the FACCH and the compressed SACCH has to be similar to the structure of the speech block and depends on the interleaving used for the speech services:

- If block diagonal interleaving is used for a speech service, one speech block is distributed on 8 frames. Hence, the FACCH/compressed SACCH are also distributed over 8 frames. If the speech service only requires to be transmitted using one basic RU, additional constraints have to be met as shown in the next chapter.

- If the interleaving depth for a speech service is restricted to 4 frames, an additional FACCH/compressed SACCH that is distributed on 4 frames has to be defined.

As shown in Fig. 3, the first empty speech block of a silent period is used to carry the SID frame followed by the SACCH information in the second empty speech frame. The same SACCH information that has been distributed over 48 frames is now transmitted using 4 or 8 frames. No SACCH data has to be transmitted for the rest of the silent period. Note that the SID and the compressed SACCH data are transmitted with the same power level as the speech data.

SACCH data block period (48 frames)

Compressed SACCH data

No SACCH data

SID frame

Start DTX silent mode

End DTX silent mode

Figure 3. New scheme for SACCH transmission on DTX

Consequently, two burst structures are used for DTX, see Fig. 4. The structure B is used to maintain power control, uplink synchronisation, and beamforming. The structure A is used to transmit the SACCH data or the SID frame. Note that the SACCH data is combined with speech data during the first silent interleaving frame if block diagonal interleaving is used for the speech service.

A :

Compressed
SACCH or SID data

L1 signal (SS,PC)

Compressed
SACCH or SID data

midamble

B :

midamble

Figure 4. The burst structures for DTX

If the silent period lasts longer than till the beginning of the next SACCH period, the SACCH is transmitted in a compressed form at the beginning of the new SACCH period, see Fig. 5. Again directly before the SACCH the SID frame is transmitted.

SACCH period

Start DTX silent
mode

New SACCH period

End DTX silent
mode

Figure 5. SACCH signalling if DTX silent period
overlaps the new SACCH period

If the same SACCH block has been transmitted during a former silent period of the same frame, there is no need to retransmit the SACCH. Note that, for this, the BTS has to store whether the current SACCH block has been already transmitted in compressed form. During the second silent period, neither the SID frame nor the compressed SACCH are retransmitted, see Fig. 6.

SACCH data block period (48 frames)

First silent period          Second silent period

Figure 6. Several silent periods in one SACCH period

Although all SACCH data is available after the reception of the first compressed SACCH, the SACCH is also transmitted during the active periods in the same way as if no DTX is applied. At the receiver the following steps have to be performed.

- At the beginning of a SACCH period a marker has to be set to 0.

- If a compressed SACCH block is sucessfully received, the marker has to be set to 1. This indicates that the SACCH information for this period has already been received.

- If the marker is equal to 1, the following SACCH info has to be ignored till the end of the SACCH period.

In Fig. 7 the relation between the measurement period and the SACCH information is depicted. The SACCH transmission always refers to the previous measurement period.

Figure 7. Measurement period and relation to SACCH data

In addition, if, e.g., more measurements are required, this additional signalling data can be transmitted in the silent period without stealing blocks from speech transmission by using the compressed SACCH transmission.
In GSM the Slow Associated Control CHannel (SACCH) is mapped on very 26th frame according to a multiframe structure. 4 frames form an interleaving frame such that the multiframe structure is producing one SACCH message every 104 frames.
As for TD-SCDMA both the frame duration has to be 5 ms (not 4.616 us as in GSM) and the TRAU frames are transmitted also every 20ms, the GSM approach is not possible. Instead, the SACCH is using a portion of the payload (the symbols) of the TD-SCDMA bursts and is continuously transmitted on every frame on special resource units (belonging to the main signaling link of the mobile station).
The advantage is that the SACCH has a higher interleaving gain than for GSM because it is mapped e.g. on 48 different frames instead of only 4 frames as for GSM.

**Concept for "Packet Services" in TD-SCDMA system**

The TD-SCDMA system is based on the GSM system. It differs from the GSM system by a complete new concept of the layer 1 at the air interface. Some characteristics of this new air interface make it impossible to adopt the Layer 1 and Layer 2 (MAC protocol layer) at the air interface of the Packet Services (GPRS) of GSM:

a) A steady connection in both directions (uplink and downlink) must be maintained to be able to perform power control, uplink synchronisation and beam forming. In GPRS gaps are allowed during a "Temporary Block Flow". So the appropriate procedures can't be reused for TD-SCDMA.

b) On normal radio channels the signal is sent beamformed. The GSM GPRS procedures require the signals being sent omnidirectionally. That's another reason that the GSM procedures are not applicable for the TD-SCDMA

**Resource allocation rules in order to maintain fast Layer 1 procedures (Power control, uplink synchronisation, beam forming)**

In order to perform a continuous power control, uplink synchronisation and beamforming a continuous transmission of bursts in uplink and downlink and at least on every time slot used is necessary. Therefore the following definitions and rules for the assignment of resources to a "Temporary Block Flow" are introduced:

1) If an uplink or downlink Resource Unit should be used for "Packet Data Services" a PDPCH/N (Packet Data Physical Channel with N subchannels) is allocated on this Resource Unit. N denotes the number of subchannels. The term subchannel is defined below.

2) PDPCHs can be assigned to a "Temporary Block Flow" as two different types: As primary channels and as secondary channels.

2.1) A primary channel is a PDPCH/1 or a subchannel of a PDPCH/N (N>1) on which the continuous sending of bursts is mandatory. It can exist in uplink or in downlink direction. In case not enough data is available from the RLC/MAC protocol layer, dummy bursts have to be inserted.

2.2) A secondary channel is a PDPCH/1 on which sending is optional. It can exist only in downlink direction.

3) An assignment of a "Temporary Block Flow" to a mobile station has to contain at least one primary channel in uplink direction and one primary channel in downlink direction. Furthermore on each time slot on which one or several PDPCHs are assigned at least one PDPCH has to be assigned as primary channel.

**Concept of subchannels**

A subchannel is a part of "Resource Unit" that can be used to carry data packets. On a PDPCH (Packet Data Physical Channel) different numbers of subchannels should be supported that are time-multiplexed on a "Resource Unit". On different subchannels different mobile stations can be active; a mobile station is associated with exactly one subchannel of that RU. If only one subchannel is established on a PDPCH every burst of the "Resource Unit" belongs to the subchannel. If two subchannels are established every $2^{nd}$ burst belongs to one of the subchannels, if n subchannels are supported every n-th burst belongs to one of the subchannels. The distance between two subsequent bursts of one specific subchannel is n* length (TDMA-frame) = n* 5ms, if n subchannels are established. The time to transfer a data packet consisting of 4 bursts takes n* 20ms. The period comprising one complete block (4 bursts) of every subchannel is termed Transmission Unit (TU). In case of a PDPCH/N a Transmission Period has the length N*20 msec.

Figure 8: Mapping of subchannels on TDMA frames for
a PDPCH with 1 subchannel, a PDPCH with 2
subchannels and PDPCH with 3 subchannels

## Dynamic switching of subchannels

If different mobile stations are active on different subchannels of a primary uplink or downlink PDPCH, there can be a dynamic switching of the number of subchannels during transmission. This switching is signalled as described below.

## Signalling of the number of subchannels

A control field in every RLC/MAC message sent on a downlink primary PDPCH is introduced.

In this field the number of subchannels of the downlink primary PDPCH itself and of the associated uplink primary channels can be signalled continuously. A possible design and usage of the control field is described in the following:

The field has the length 4 bit separated into two groups of 2 bit. The first group indicates the number of subchannels of the downlink primary PDPCH itself from the next Transmission Period on. The second group indicates the number of subchannels of the primary channel or primary channels associated with the downlink primary channel; in case more than one uplink primary channel is associated with one downlink primary channel in an assigned TBF, the number of subchannels of the different uplink primary channels are indicated in subsequent RLC/MAC blocks on the downlink primary channel. Every mobile station having an active Temporary Block Flow receives the information about the number of subchannels on their own primary channels. Therefore the appropriate RLC/MAC blocks can be sent beamformed. If after switching to another number of subchannels a Transmission Unit doesn't start in the new scheme immediately the Layer 1 has to insert dummy bursts. Using this dummy bursts the fast L1 procedures can continue without interruption. With the start of the first Transmission Unit also the Layer 2 transmission can be continued. If a mobile station is active on a subchannel with number x and the number of subchannels changes it has in the subchannel scheme again to use subchannel with the number x. The number of subchannels can only be decreased if the subchannel with highest number or several subchannels with the highest numbers are not used by a mobile station or several mobile stations.

Another way to signal the switching of the number of subchannels is the definition of a RLC/MAC message that indicates the number of subchannels.

## Benefit of the above-described concept

In case there are overlapping Temporary Block Flows of different mobile stations the subchannel concept can be used to multiplex primary channels of these TBFs on one PDPCH. This can save capacity in case on these channels "acknowledges" are sent needing the capacity of one PDPCH only partially.

In case one mobile station is already active on a PDPCH used as a primary channel and a second mobile station should also start sending on this channel the number of subchannels can be increased dynamically. So the first mobile station can continue sending without interruption. If one of the two mobile stations have finished their TBF the number of subchannels can be decreased again.

On secondary channels the concept of GSM can be applied. The RLC/MAC blocks are provided with a TFI (Temporary Flow Identifier) assigned to the mobile station in the TBF establishment phase. This TFI addresses a certain mobile station uniquely. So on secondary channels multiplexing can be performed with a granularity of 20 msec.

**Use of the power control and synchronisation shift symbols in the TD-SCDMA system**

At present the Chinese TD-SCDMA is being standardised within CWTS (Chinese Wireless Telecommunication Standard), ITU (International Telecommunications Union) and 3GPP (Third Generation Partnership Project).

TD-SCDMA uses uplink synchronisation to synchronise all the users in the uplink time slots. This is done by means of UpLink Synchronisation Control (ULSC). In ULSC the base station transmits commands in the downlink to the mobile station indicating weather the mobiles station would add in step more, one step less or leave the uplink synchronisation unchanged. The main advantage is that the channelisation codes of the users are received orthogonal.

TD-SCDMA also uses power control (PC) for both UL and DL. For power control also commands in the UL and in the DL are transmitted.

In TD-SCDMA PC and ULSC commands are transmitted every frame in UL (uplink) and DL (downlink). The commands are modulated CDMA symbols.

The task of this invention is to find way how the symbols are used to efficiently use the control symbols - especially under the following aspects:

- Using variable spreading factors of 16, 8, 4, 2, 1
- Using more than one CDMA code allocated to a user
- Using more than one time slot allocated to a user

In the present TD-SCDMA standard, one symbol per CDMA code (resource unit) is used for power control and 1 symbol is used for ULSC.

The text in the standard reads (C102) :

1.1.1.1.1 Transmission of L1 Control Signals

The burst for dedicated channels provide the possibility for transmission of L1 control signals in uplink and downlink respectively.

The transmission of L1 control signals is necessary in all communication procedures. As an example, this section show the L1 control symbols in the burst except in FACH and RACH which more symbols are required for L1 control signals. Hence the midamble structure and length is not changed. The L1 control signals are to be transmitted directly adjacent to the midamble, Figure 1 shows an example of the position of the L1 control signals in traffic burst.

Figure 1.  Example of L1 control signal
position in traffic burst

(GP denotes the guard period and CP the chip period)

The L1 control signals are spread with the same spreading factor (SF) as the data parts. The SF of the burst which contains the L1 control signal is applied to both data and signalling and shall be constant, except when a negotiation between transmitter and receiver initiates a change of the SF.

Note: In Figure 1, The L1 control signals content 4 symbols, they are:

| | |
|---|---|
| Power Control (PC) | 1 symbol |
| Timing Advance (TA) | 1 symbol |
| Stealing Flag (SF) | 1 symbol |
| CRC | 1 symbol |

Solution of the invention

1.1.1.1.1 Transmission of L1 Control Signals

The bursts for burst type 1 of the DPCH (Decicated Physical CHannel) provide the possibility for transmission of L1 control signals in uplink and downlink respectively.

The L1 control signals are to be transmitted directly adjacent to the midamble, Figure 2 shows the position of the L1 control signals in traffic burst for phase 1. For lower spreading factors than 16, the number of L1 symbols will be increased according to the spreading factors in phase 1.

Comment: Advantages

a) Regardless if a service is mapped on a big resource unit having a spreading factor (SF) of 8 or 2 small resource units of SF 16. The amount and processing of the control signals stays the same.

b) The error protection of the control commands increases if they are more symbols are used.

The L1 control signals are spread with the same spreading factor (SF) as the data parts. The SF of the burst which contains the L1 control signal is applied to both data and signalling.

In Figure 2, the L1 control signals have the number and position given in Table 2.

L1 (16/SF symbols)   L1 (32/SFsymbols)

| Data symbols(336chips) | Midamble | Data symbols(320chips) | GP 16 CP |

144 chips

675 us

Figure 2 L1 control signal position in the

traffic burst for phase 1

(GP denotes the guard period and CP the chip period)

Table 2

| Number and position of the L1 symbols | |
|---|---|
| Power Control (PC) | 16/SF symbols after the SS symbols |
| Synchronisation shift (SS) | 16/SF symbols after the midamble |
| Stealing Flag (StF) | 16/SF symbols before the midamble, e.g. one symbol if SF=16 |

For phase 1 it is assumed that both BTSC and UE need a guaranteed time of 13 time slots (not more and not less) to execute (of the regarded UL or DL slot) and 13 time slots (not more, but also less is allowed) to generate (to the regarded UL and DL slot) the PC and SS commands. If the 13th slot after arrival of the command is not used for the respective link, it is executed later.

FOR LATER PHASES:

Both UE and BTSC have to signal in the class marks and in the BCCH (for random access) and during the handover the time needed to generate and to execute PC and SS commands. The coding shall comprise 4 bits naming the number of time slots the UE and BTSC need to do this (for execution less is possible). 0000 means that the UE/ BTSC is able to react the following time slot and 1111 means that the reaction takes place in the 16th time slot following.
The corresponding signalling for the later phases has to be filled with 1101 (13 time slots).

Comment: Advantage

If the control algorithm knows the execution time of the control commands it can control more precise.

1.1.1.1.2 The format of the layer 1 control fields

The following parameters are associated with the different layer 1 control fields.

Table 3

| Layer 1 parameters | | | |
|---|---|---|---|
| Parameter | Length in bit | Symbols in burst | Comments |
| StF (stealing flag) | 2*16/SF | 16/SF | |
| PC (power control) | 2*16/SF | 16/SF | |
| SS (synchronisation shift) | 2*16/SF | 16/SF | |

1.1.1.1.2.1 Description of parameters

In this section the parameters of the layer 1 control fields given in Table **3** are described.

1.1.1.1.2.1.1 Stealing flag (StF) not of relevance for this invention

1.1.1.1.2.1.2 Power control (PC) not inventive - description only

The PC is utilised to command a power level adjustment of $\pm$ $P_{step}$ dB.
The bit values are mapped to actions as follows:

Table 4

| Mapping of bit values for PC | |
|---|---|
| Bit values | Corresponding action |
| 00 | Increase TX power by $P_{step}$ dB |
| 01 | Do nothing |
| 10 | Do nothing |
| 11 | Decrease TX power by $P_{step}$ dB |

The default $P_{step}$ values and the used alphabet are signalled by the network by means of system information that is broadcast in the cell.

Comment:

Additionally, $P_{step}$ can be reconfigured on per call base, but this feature is not foreseen for phase 1.

The PC command is sent on a frame base. Hence, it is not protected by repetition coding. The alphabet not using the do-nothing commands comprise the bit values 00 and 11; the other alphabet comprises all 4 bit combinations. If the do nothing'-command is not utilised, a redundancy is inherent. In this case the code rate is ½ (for SF 16).

1.1.1.1.2.1.3 Synchronisation shift (SS) not inventive - description only

The SS is utilised to command a timing adjustment of $\pm$ (k/8) Tc each M frames, where Tc is the chip period.
The bit values are mapped to actions as follows:

Table 5

| Mapping of bit values for SS | |
| --- | --- |
| Bit values | Corresponding action |
| 00 | Increase synchronisation shift $T_a$ by k/8 Tc |
| 01 | Do nothing |
| 10 | Do nothing |
| 11 | Decrease synchronisation shift $T_a$ by k/8 $T_c$ |

default k and M values are signalled by the network by means of system information that is broadcast in the cell.

Comment I:

Additionally, the M and k values can be reconfigured on a per-call base, but this feature is not foreseen for phase 1.
The SS command is repeated M times. The SS command is inherently protected by a repetition code of rate 1/M. If the 'do nothing'-command is not utilised, additional redundancy is available. The all over code rate is 1/(2M). The SS command is executed every M frames.
The frame where the first of the M SS commands is transmitted is defined by the System Frame Number (SFN):

$$SFN \text{ modulo } M = 0$$

Comment II:

For the execution of the SS it must not be linked to the DL in the UE, i.e. the UE starts the transmission of the UL a certain number of (sub)chips after the reception of the DL frames. Instead, if the SS does not change the UE starts the transmission if the UL 5 ms (according to its own UL counter) after the transmission of the last UL burst in the same UL time slot started.
In case it changes the transmission starts 5 ms +/- k/8 $T_c$ after the last burst in that tie slot started. Only for the measurement of the timing advance (TA) the measurement refers to the reception of the DL bursts.
The reason is that the velocity of the controller doubles this way. If the controller is linked to the DL timing it has to control out a time corresponding to 2 times a change in distance. In case the controller is linked to the UL timing the controlled time is only corresponding to a 1 time a change in distance.

1.1.1.2 Power control for services with multiple or big RU

For bigger users having more than one RU and/or asymmetric traffic in UL and DL and/or RU (resource unit) with a smaller spreading factor than 16 the power control commands are distributed according the a particular pattern on the given RU:
For the first phase of TD-SCDMA there is a single power control symbol and a single ULSC symbol for RUs using spreading factor 16 (small RU).
are 2 power control symbols for RU using spreading factor 8 (bigger RU).
In later phases there (big RU)

- will be 4 power control symbols for RU using spreading factor 4
- will be 8 power control symbols for RU using spreading factor 2

- will be 16 power control symbols for RU using spreading factor 1
- will be the possibility the reduce the number of power control symbols to 0 or 1 per RU.

Each of the power control symbols of the UL will be responsible for the DL and vice versa.

In case a UE has e.g. more than one or a bigger UL RU. The L1 control commands and ULSC commands for each DL time slot (all RU on that time slots have the same L1 control command) will be distributed to the following rules, see Table 6 (exemplarily the UL PC is taken, the algorithm works the same for the ULSC commands):
1. The order of the served DL time slots will be form the first to the last DL time slot occupied by user in the frame. If a user has e.g. DL time slots 3, 4, and 5 the order will be 3,4,5,3,4,5, .... (case 1 in Table **6**)

2. The order of the serving power control symbols (serving DL time slots 3, 4, and 5 in the example) is according to the following rules:

a) first to last UL time slot

b) small to big spreading code number within a time slot

c) first to last PC symbol transmitted on the RU.

3. The first serving UL power control symbols belong to the first served DL times slot in absolute system frame number (SFN) 0.

4. In case the services is established or changed in a frame with a frame number being unequal to 0 the order is as if this configuration had been started in absolute frame number 0.

In order to achieve rule number 4, the following equation is used to determine the DL time slot controlled by the first PC symbol:

$$UL_{pos} = (SFN \cdot N_{PCsymbols}) \mathrm{mod}(N_{DLslot})$$

where SFN is the system frame number, $N_{PCsymbols}$ the number of PC symbols in a frame and $N_{DLslot}$ the number of DL slots in a frame.

Table 6 Two Examples of UL PC command distribution with $N_{DLslotos}=3$

Case 1: $N_{PCsymbols}=2$; Case 2: $N_{PCsymbols}=4$

| Sy-stem Frame Num-ber | Case 1 (2 UL PC symbols) | | The order of the served DL time slot (DL time slot num-ber) | Case 2 (4 UL PC symbols) | |
|---|---|---|---|---|---|
| | The order of UL PC symbols | | | The order of UL PC symbols | |
| SFN= 0 | $(UL_{pos}=0)$ | 0 | 0 (TS3) | 0 | $(UL_{pos}=0)$ |
| | | 1 | 1 (TS4) | 1 | |
| | | | 2 (TS5) | 2 | |
| | | | 3 (TS3) | 3 | |
| SFN= 1 | $(UL_{pos}=2)$ | 0 | 0 (TS3) | 0 | $(UL_{pos}=1)$ |
| | | 1 | 1 (TS4) | 1 | |
| | | | 2 (TS5) | 2 | |
| | | | 3 (TS3) | 3 | |
| | | | 4 (TS4) | | |
| SFN= 2 | $(UL_{pos}=1)$ | 0 | 0 (TS3) | 0 | $(UL_{pos}=2)$ |
| | | 1 | 1 (TS4) | 1 | |
| | | | 2 (TS5) | 2 | |
| | | | 3 (TS3) | 3 | |
| | | | 4 (TS4) | | |
| | | | 5 (TS5) | | |
| . . . | . . . | | . . . | . . . | |

For the DL power control the situation is vice versa.

Comment: Advantage

The spreading of the L1 control commands leads to a better protection of the commands and to a best effort procedure for very asymmetrical cases (e.g. if there are many DL time slots and not that much UL time slots (RU)).

The inventive step is

a) to increase the number of ULSC and PV commands to be 16/SF for resource units with different spreading factor for easy handling of different mapping on the RUs and improved performance.

b) To communicate the time needed to execute the PC and ULSC commands in the network for a more precise control algorithm.

c) To multiplex the control symbols on the available RU to reach a good error protection a best effort scheme for asymmetrical services.

**Use of the power control and synchronisation shift symbols for packet services in the TD-SCDMA system**

TD-SCDMA uses uplink synchronisation to synchronise all the users in the uplink time slots. This is done by means of UpLink Synchronisation Control (ULSC). In ULSC the base station transmits commands in the downlink to the mobile station indicating whether the mobiles station would add in step more, one step less or leave the uplink synchronisation unchanged. The main advantage is that the channelisation codes of the users are received orthogonal.
TD-SCDMA also uses power control (PC) for both UL and DL. For power control also commands in the UL and in the DL are transmitted.
In TD-SCDMA PC and ULSC commands are transmitted every frame in UL (uplink) and DL (downlink). The commands are modulated CDMA symbols.
It is intended to transmit the packet services using subchannels. A subchannel can use the same resource unit (RU) time slot every, every second, every third and every forth frame. The packets are treated like very short circuit switched links. Thus, the situation that e.g. only UL or only DL are transmitted will never occur.

Table 7

| Mapping of the packet transport channels on the PDPCH for later phases | | |
| --- | --- | --- |
| Channel Designation | Sub-channel Number | Interleaved block TDMA frame mapping |
| PDPCH/1 | 0 | B0(0...3), B1(4...7), B2(8...11), B3(12...15), B4(16...19), B5(20...23), B6(24...27), B7(28...31), B8(32...35), B9(36...39), B10(40...43), B11(44...47) |
| PDPCH/2 | 0 | B0(0,2,4,6), B1(8,10,12,14), B2(16,18,20,22), B3(24,26,28,30), B4(32,34,36,38), B5(40, 42, 44, 46) |
|  | 1 | B0(1,3,5,7), B1(9,11,13,15), B2(17,19,21,23), B3(25,27,29,31), B4(33,35,37,39), B5(41, 43, 45, 47) |
| PDPCH/3 | 0 | B0(0,3,6,9), B1(12,15,18,21), B2(24,27,30,33), B3(36,39,42,45) |
|  | 1 | B0(1,4,7,10), B1(13,16,19,22), B2(25,28,31,34), B3(37,40,43,46) |
|  | 2 | B0(2,5,8,11), B1(14,17,20,23), B2(26,29,32,35), B3(38,41,44,47) |
| PDPCH/4 | 0 | B0(0,4,8,12), B1(16,20,24,28), B2(32,36,40,44) |
|  | 1 | B0(1,5,9,13), B1(17,21,25,29), B2(33,37,41,45) |
|  | 2 | B0(2,6,10,14), B1 (18,22, 26, 30), B2(34,38,42,46) |
|  | 3 | B0(3,7,,11,15), B1(19,23,27,31),B2(35,39,43,47) |

An interleaving frame is built using 4 frames belonging to a certain subchannel.

Inherent to this concept is that if a subchannel is used e.g. every 4th frame (e.g. for acknowledgements only), the mobile radio channel can only be investigated and updated every 4th frame with a power control (PC) and the uplink synchronisation approach for the circuit switched links. This is very disadvantageous for the performance of the packet PC and the packet ULSC.

The task of this invention is to find a suitable way to have a better performance for the packet switched channels.

In the TD-SCDAM standard, no subchannels and no special procedure for the PC and the ULSC for circuit switched services are foreseen.

The invention solves this problem by a continuous uplink synchronisation control/power control updating for circuit switched and packet switched links.

There is a difference between the power and ULSC updating of circuit and packet switched links.

For circuit switched links the execution of the control commands is always taking place in the next frame (time slot dedicated to that link) or later after having transmitted a the corresponding burst. E. g. in case the UE transmits a burst in frame number 10 the control commands arriving in frame number 11 are executed. In case the BTSC does not transmit any frames till the 20th frame (DL DTX) than the control commands arriving in the 20th frame are executed. In case there is no UL burst between two consecutive DL bursts (UL DTX) the control commands of the second DL frame is not executed. The same mechanism applies for the execution of DL control commands. The reason for this behaviour is that the DTX period cannot be securely detected, i.e. in case nothing is received it cannot be distinguished between a fading hole and no transmission. In case the BTSC or the UE receives no burst due to DTX is transmits power up commands and do nothing ULSC commands in the L1 field to the UE or the BTSC. Here the invention starts

For packet switched links it is known in advance by both BTSC and UE when bursts are going to be received and to be transmitted. For this reason the control commands can be concatenated in case no burst is received between the transmission of two bursts. In order to avoid large control errors each control command is executed individually. E.g. in case the UL is transmitted every 4th frame and the DL every frame the control commands of the 4 frames following the UL slot can be concatenated. Concatenation means that different L1 commands can be transmitted in the period of the subchannel. The starting point of the concatenated control command depends on the processing time (needed to estimate the received power and the timing of the received burst and to generate, assemble and to transmit the burst containing the L1 control commands) of the UL (DL) burst in the base station and in the mobile station respectively. This time is made known in the TD-SCDMA system. In this case up to 4 control steps can be taken up and down by transmitting all four commands up and down.

Inherent error protection is obtained by applying the following rules:

- The desired number of steps is commanded as soon as possible.
- The rest of the control commands is filled with a sequence of commands not altering the effect of the first commands.
- In case there is "do nothing symbol" the filling sequence starts with UP commands.

The control commands are executed such the average absolute control error is minimised.

The advantages are

- that the error for the execution cannot exceed the value as for circuit switched links. (The bigger steps would be encoded with MSB and LSB there will be a high damage if the MSB is received wrong.)
- that the same controller speed can be maintained as for circuit switched links.
- That in contrast to the circuit switched links the 11 control signals are protected by means of an additional coding.

The inventive step is

a) Not to transmit the same L1 control commands for the period of the subchannels.

b) To transmit different L1 control commands during the subchannels.

c) Encoding a coding an order to of the L1 control signals to include error detection on error correction facilities in the transmission of the L1 control signals.

Examples: (UL is transmitted every 4th frame)

With "do nothing symbols":

| Detected | received (+1 = 1 step up, -1 = 1 step down, 0 = no action) |
|---|---|
| 1 step UP | +1, 0, 0, 0 |
| 2 steps UP | +1,+1, 0, 0 |
| Error | +1,-1, 0, 0 |
| Error | +1,+1, 0,+1 |

Without "do nothing symbols":

| Detected | received (+1 = 1 step up, -1 = 1 step down) |
|---|---|
| 1 step UP | not applicable |
| 2 steps UP | +1,+1,+1,-1 |
| 0 steps UP | +1,-1,+1,-1 |
| Error | -1,+1,+1,-1 |
| Error | +1,-1,-1,+1 |

**Processing of synchronisation shift commands in the TD-SCDMA mobile station**

TD-SCDMA uses uplink synchronisation to synchronise all the users in the uplink time slots. This is done by means of UpLink Synchronisation Control (ULSC). In ULSC the base station transmits commands in the downlink to the mobile station indicating weather the mobiles station would add in step more, one step less or leave the uplink synchronisation unchanged. The main advantage is that the channelisation codes of the users are received orthogonal. The mobile station has to execute the ULSC commands in an efficient way.

In GSM the timing advance control performs the same task. For the timing advance control the mobile station measures the timing of the DL (DownLink) and advances the transmission of the UL (UpLink) with respect to the received timing advance commands. Because the signals transmitted by the mobile station need a certain time (propagation delay) to arrive at the base station the mobiles have to advance the transmission of the UL with respect to the timing of the UL in order to ensure that the bursts arrive according to the bas stations timing at the base station. As shown in Figure 3 the timing advance is strongly linked to the timing of the DL.

| DL slot 1 | DL slot 2 | DL slot 3 |
|---|---|---|

DL timing
mobile station

Timing advance

UL timing
mobile station

| UL slot |
|---|

Propagation delay UL

| UL slot |
|---|

UL timing
base station

Figure 3 Timing advance mechanism in the GSM system

Note that the timing advance is proportional to two times the distance between base station and the mobile station:

$$2d \sim TA^*c$$

where d is the distance between base station and mobile station , TA the timing advance and c the velocity of light.

For the ULSC the increment of the synchronisation shift is 1/8 chip (about 100 ns) whereas the increment of the timing advance is 3700 ns. Thus, the execution of the execution of the ULSC is more time critical. Thus is the reason why the SS (synchronisation shift) is updated once per 5 ms.

The ULSC has to react very fast to street corner effects, change in the distance and the change in the shape of the channel impulse response. A street corner effect is occurring if the mobile station propagation condition change dramatically in case the mobile station comes around a street corner or if a door is closed blocking the main path of the mobile station. For the propagation delay this means that the delay for the strongest channel impulse response path changes significant. It could change for example by 4 chips (a chip has a duration of approximately 800 ns) within a short time.

Assuming that the propagation delay is increased by 4 chips and the method of GSM is taken for the execution of the timing advance.

If no ULSC commands are transmitted the SS stays fixed. The DL would arrive 4 chips later at the mobile station. As the SS I this method is linked to the timing of the DL the timing advance would stay the same in this case. Thus, the UL burst of that mobile station would arrive 8 chip too late (4 chips because the DL propagation delay has changed and 4 chip because the uplink propagation delay has changed).

Figure 4 Timing advance mechanism in the GSM system
error shown in dotted lines

The new proposal foresees that the timing of UL and DL are controlled independently. Only for the measurement of the timing advance the two timings are treated together. For a timing being independent form the DL the UL is first transmitted every TDMA frame using an internal counter for the UL timing. If a SS update arrives it is treated as a relative command so the frame would start the ULSC step earlier or later than a full frame duration after the beginning of the last UL burst at the same time slot position.

```
┌─────────────┬─────────────┬─────────────┐
│  DL slot 1  │  DL slot 2  │  DL slot 3  │
└─────────────┴─────────────┴─────────────┘
```

DL timing
mobile station

UL timing
mobile station

```
┌─────────────┐
│   UL slot   │
└─────────────┘
```
Old Propagation

UL timing

ERROR
```
┌─────────────┐
│   UL slot   │
└─────────────┘
```
base station

Figure 5 Synchronisation shift mechanism new proposal
error shown in dotted lines

In the example form above the error would only be due to the changed UL timing. 4 chip has to be controlled. Thus the new method is two times faster than the old method. The same applies also for fast fluctuation in the shape of the channel impulse response which require even faster changes in the SS.

An additional error source is the frequency error of the mobile stations clock. It will lead to an additional drift in the SS. With 6400 chip per frame and a frequency error of 0.2 ppm the SS error can be up to $1.28 \times 10^{-3}$ chip per frame. Thus 98 frames are needed to create an error of 1/8 chip with this SS drift. Thus, this error is neglectable.

**Channel coding schemes for packet switched services**

For packet switched channels, the concepts of GSM cannot be fully applied. The reason for this is the smaller size of one basic Resource Unit (RU). In GPRS, the RLC/MAC blocks carrying RLC data blocks have the following block sizes:

184bit, CS1;
271bit, CS2;
315bit, CS3;
431bit, CS4.

They always fit into one RU, i.e. one time slot at a certain frequency. In TD-SCDMA a single basic RU can only carry the payload of CS1 or CS2.

Using a single basic RU:

The advantage of mapping these blocks on a single basic RU is the following:

-   Small blocks have the advantage that they fit well to the efficient transmission from the BTS to the BSC and PCU (Packet Control Unit).
-   Mapping these blocks on a single RU means that low redundancy is added and hence, high data rate services can be realised with a small number of RUs. E.g. for a 384 kbit/s service using CS2 about 29 basic RUs have to be assigned instead of 58 basic RUs that have to be assigned if two RUs carry one CS2 packet.

In the symmetric constellation of the TD-SCDMA system only 48 RUs can be assigned into one direction.

The disadvantage of this mapping is the following:

If a convolutional encoder of rate R=1/2 is applied the RLC/MAC blocks corresponding to CS1 and CS2 can be mapped onto one basic RU. The puncturing rates are 24% and 44%, respectively. The code rates are 0,57 and 0,82, respectively. There is only little redundancy, and hence, this scheme is only effective in good environments.

Using two basic RU:

In order to apply reliable transmission also in bad environments, two basic RUs are to be used for the transmission of the data blocks.

In order to exploit the advantages in good environments and in order to allow also efficient data transfer in bad environments, two inventive modes are used for packet transmission.

Mode 1: one basic RU is assigned (by mapping and/or puncturing),
Mode 2: two basic RUs are assigned (by adding redundancy).

So during call setup or with channel mode modify the modes can be changed. Therefore, it is now possible to perfectly adapt to the needs of the user. High data rates can be supplied also in symmetric mode.

References:

[1] CWTS WG1: TS C101 V3.0.0, 1999-10, Physical layer - General description

[2] CWTS WG1: TS C102 V3.0.0, 1999-10, Physical Channels and Mapping of Transport Channels onto Physical Channels

[3] CWTS WG1: TS C103 V2.2.0, 1999-10, Multiplexing and Channel Coding

[4] CWTS WG1: TS C104 V3.0.1, 1999-10, Spreading and Modulation

[5] CWTS WG1: TS C105 V3.0.0, 1999-10, Physical layer Procedures

[6] 3G TR 25.928 V0.0.4, 2000-04, 1,28Mcps functionality for UTRA TDD Physical Layer

**Claims**

1. Method for signalling an identification code (BSIC), said identification code (BSIC) being used to identify a base station of a radio communication system, **characterised in that** a synchronisation sequence (SYNC), a midamble code and/or a scrambling code are used as the identification code.

# EP 1 148 751 A1

**European Patent Office**

## EUROPEAN SEARCH REPORT

Application Number

EP 00 10 8554

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MOULY M ET AL: "RADIO RESOURCE MANAGEMENT" FR,LASSAY-LES-CHATEAUX, EUROPE MEDIA, 1993, pages 308-430, XP000860006 * page 336 - page 338 * | 1 | H04Q7/38 |
| A | WO 98 09455 A (ERICSSON TELEFON AB L M) 5 March 1998 (1998-03-05) * page 8, line 20 - page 9, line 2 * | 1 | |
| A | WO 99 66754 A (ERICSSON TELEFON AB L M) 23 December 1999 (1999-12-23) * page 6, line 5 - line 10; claim 2 * * page 13, line 21 - line 25 * | 1 | |

**TECHNICAL FIELDS SEARCHED (Int.Cl.7)**

H04Q
H04B

The present search report has been drawn up for all claims

| Place of search | Date of completion of the search | Examiner |
|---|---|---|
| THE HAGUE | 27 September 2000 | M. García |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

**ANNEX TO THE EUROPEAN SEARCH REPORT
ON EUROPEAN PATENT APPLICATION NO.**

EP 00 10 8554

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2000

| Patent document cited in search report | | Publication date | Patent family member(s) | | Publication date |
|---|---|---|---|---|---|
| WO 9809455 | A | 05-03-1998 | US | 5953323 A | 14-09-1999 |
| | | | AU | 721170 B | 22-06-2000 |
| | | | AU | 3875597 A | 19-03-1998 |
| | | | BR | 9711377 A | 17-08-1999 |
| | | | CN | 1228903 A | 15-09-1999 |
| | | | EP | 0922367 A | 16-06-1999 |
| | | | NO | 990979 A | 29-04-1999 |
| WO 9966754 | A | 23-12-1999 | AU | 4813499 A | 05-01-2000 |

EPO FORM P0459

For more details about this annex : see Official Journal of the European Patent Office, No. 12/82